# FASCICULE DE BREVET EUROPEEN

(11) **EP 1 313 602 B1**
(45) Date de publication et mention de la délivrance du brevet: **27.04.2005**
(21) Numéro de dépôt: 01965358.3
(22) Date de dépôt: 27.08.2001
(51) Int. Cl.: B29C 41/22

(54) **PROCEDE DE FABRICATION D'UNE PIECE DE REVOLUTION PAR ROTOMOULAGE ET PIECE OBTENUE**
VERFAHREN ZUR HERSTELLUNG EINES ROTATIONSKÖRPERS DURCH ROTATIONSFORMEN UND DADURCH HERGESTELLTES WERKSTÜCK
METHOD FOR MAKING A PART WITH CLEARANCE VOLUME BY ROTATIONAL MOULDING AND RESULTING PART

(30) Priorité: 30.08.2000 FR 0011072
(43) Date de publication de la demande: 28.05.2003
(73) Titulaire: COMMISSARIAT A L'ENERGIE ATOMIQUE, 75752 Paris Cédex 15 (FR)
(72) Inventeur: JOUSSE, Franck, F-37000 Tours (FR); MAZABRAUD, Philippe, F-45000 Orléans (FR); TCHARKHTCHI, Abbas, F-94240 L'Hay-les-Roses (FR); KEARNS, Mark, Co. Down, North Ireland BT32 4RO (GB)
(74) Mandataire: Audier, Philippe André
(86) Numéro de dépôt international: PCT/FR2001/002676
(87) Numéro de publication internationale: WO 2002/018117

(56) Documents cités:
- EP-A- 0 518 354
- FR-A- 1 604 824
- FR-A- 2 776 228
- US-A- 5 171 346
- US-A- 5 567 296

## Description

### Domaine technique

La présente invention se rapporte à un procédé de fabrication d'une pièce de révolution par rotomoulage et à une pièce obtenue par ledit procédé.

Elle se rapporte notamment, mais sans s'y limiter, à la fabrication de pièces ou structures de révolution multicouches, sans soudure, en matières plastiques.

Par structure ou pièce de révolution, on entend structures définissant un volume mort de manière à former par exemple un cylindre, ou un contenant tel qu'un réservoir, une boîte, une citerne, ou une cuve .

Le rotomoulage ou moulage par rotation est utilisé pour la fabrication de pièces creuses en matière plastiques. Il s'agit d'une technique économique utilisée notamment pour la fabrication de pièces en petites séries.

Dans les procédés de rotomoulage, la matière mise en fusion se déplace sous l'effet de la gravité dans un moule en rotation dans un four. La matière rotomoulée doit donc présenter un comportement physico-chimique et une morphologie particuliers ce qui explique la gamme restreinte de matières rotomoulables présente à ce jour sur le marché.

Pour des applications de stockage, de type réservoir à gaz par exemple, il est nécessaire d'obtenir des structures de révolution sans soudure et homogènes, présentant des propriétés améliorées de perméabilité au gaz, de tenue mécanique, de tenue aux irradiations, et aux solvants.

### Art antérieur

Les protocoles de rotomoulage actuels utilisent essentiellement comme matériaux des polyéthylènes, des polychlorures de vinyle, des polyamides, des polyuréthanes, des copolymères acétate de vinyle, et des polystyrènes. Ces protocoles préconisent l'utilisation de grades de ces polymères thermoplastiques assez peu visqueux ayant une densité comprise entre 0,924 et 0,939 (c'est-à-dire une masse volumique entre 0,924 g/cm³ et 0,939 g/cm³) et un indice de fluidité compris entre 3 et 9 g/10 minutes. Le grade est une appellation commerciale : pour un polymère, il peut y avoir plusieurs grades commerciaux, c'est à dire avec une cristallinité différente ou des masses différentes ou des longueurs de chaîne différentes etc.

Le rotomoulage de multicouches dans l'industrie concerne essentiellement des structures du type polyéthylène/polyéthylène ou polyéthylène/mousse de polyuréthane/polyéthylène.

Des thermoplastiques plus techniques et notamment ceux de la famille des copolymères éthylène-alcool vinylique n'ont jamais été rotomoulés. Ces copolymères ont en fait été mis en oeuvre par injection ou extrusion pour des applications dans l'emballage, par exemple au moyen de matériaux barrières aux gaz, dans l'alimentaire ou les cosmétiques. Dans ces applications, ils ont été utilisés en faibles épaisseurs, inférieures à 500 µm.

Le document FR-A-2 776 228 décrit un corps creux multicouche en matière plastique. Il décrit en particulier l'utilisation de techniques d'extrusion et pour préparer de telles structures. Il décrit également l'utilisation de copolymère statistique d'éthylène et d'alcool vinylique (EVOH) en tant que barrière vis-à-vis du fluide stocké. Les exemples décrivent la coextrusion d'un tube tricouche à 215°C.

Le document US-A-5,567,296 décrit un réservoir de transport et de stockage de carburants fluides hydrocarbonés. Le réservoir est composé d'une structure laminée d'un corps de résine polymérique et d'un métal électrodéposé. Une couche de EVOH utilisée en tant que barrière est décrite. En revanche, ce document ne décrit pas l'utilisation d'un EVOH ayant une densité comprise entre 0,94 et 1,4 et un indice de fluidité compris entre 1,3 et 4,2 g/10 minutes à une température de 170 à 240°C dans un procédé de rotomoulage.

Le document FR-A-1 604 824 décrit un procédé pour la production de pièces moulées creuses. Il décrit une technique de rotomoulage. Les matériaux décrits comme pouvant être mis en oeuvre sont des polyoléfines telles que le polyéthylène et le polypropylène, des polyamides comme le polyamino-undécanoamide et le polycaprolactane, des composés polyvinyliques comme le chlorure de polyvinyle, et des acétates comme l'acétobutyrate de cellulose. L'utilisation de EVOH n'est jamais décrite.

Le document EP-A-0 518 354 décrit un conteneur multicouche comprenant une couche A d'une résine polyoléfine, une couche B adhésive d'une résine polyoléfine modifiée par un anhydride ou un acide carboxylique, et une couche C comprenant notamment un polyamide et un éther polyphénylène. Un copolymère d'acétate de vinyle et d'éthylène est décrit, mais l'utilisation de EVOH n'est jamais décrite.

Le document US-A-5,171,346 décrit un matériau composite isolant et non une pièce de révolution. Il décrit l'utilisation d'un copolymère EVOH pour ses propriétés de base de perméabilité aux gaz. Il ne décrit pas de rotomoulage.

### Exposé de l'invention

La présente invention fourni un procédé de fabrication d'une pièce de révolution comprenant un cycle de dépôts successifs de couches de matériaux thermoplastiques par rotomoulage, ledit cycle comprenant au moins un dépôt par rotomoulage, à une température de 170 à 240°C, par exemple de 180 à 230° C, d'une couche constituée d'un copolymère éthylène-alcool vinylique ayant une densité à cette température comprise entre 0,94 et 1,4, par exemple entre 1,10 et 1,22, et un indice de fluidité compris entre 1,3 et 4,2 g / 10 minutes, par exemple entre 1,5 et 4 g / 10 minutes.

Selon l'invention, le copolymère éthylène-alcool vinylique peut aussi être défini comme étant de formule (I) suivante: 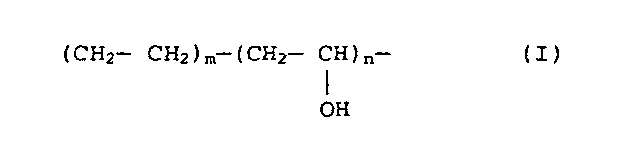 avec m compris entre 10 et 80% en moles dans le polymère, ou encore entre 20 et 80 % en moles.

L'indice de fluidité du copolymère éthylène-alcool vinylique (« Melt Flow Indice ») est déterminé suivant la norme ASTM D 1238-88 au moyen d'un essai effectué sur une machine Kayeness Galaxy 1 (marque de commerce), modèle 7053 DE fabriquée par la société Kayeness Inc., Morgantown, PA 19543. Cet essai consiste à placer une charge de polymère sur un tube placé à une température définie, supérieure à la température de fusion du polymère, et à mesurer la quantité de polymère qui coule durant 30 secondes. Ce temps est ensuite converti en minutes.

Les polymères EVOH sont des thermoplastiques ayant de bonnes propriétés mécaniques et forment une très bonne barrière aux gaz. Ces propriétés sont d'autant plus intéressantes que la couche d'EVOH qui peut être obtenue grâce au procédé de la présente invention est épaisse.

Les polymères d'EVOH sont en général disponibles dans le commerce sous forme de granulés ou pastilles. De préférence, les granulés ou pastilles commerciaux de polymères seront préalablement micronisés en une poudre, par exemple à température ambiante ou cryogénique, dont la granulométrie est choisie suivant la nature des polymères et la structure du multicouches envisagé, ayant de préférence une granulométrie inférieure à 0,7 mm, avantageusement comprise entre 0,1 et 0,7 mm. Cette micronisation permet de ne pas trop chauffer l'EVOH par la suite pour le fondre, tout en obtenant une couche homogène.

De plus, le grade d'EVOH choisi selon la présente invention a de préférence un indice de fluidité plus faible, c'est à dire une viscosité plus grande, que ceux des thermoplastiques tels que PE, PVC, PA habituellement rotomoulés. En d'autres termes, selon l'invention, l'EVOH reste très visqueux à l'état fondu pour pouvoir être par exemple rotomoulé avec des épaisseurs supérieures à 0,5 millimètre, ce qui va à l'encontre des protocoles de rotomoulage habituels dans lesquels on recherchait des grades assez fluides de thermoplastiques.

Le thermoplastique EVOH absorbe beaucoup d'eau ce qui entraîne une chute de ses propriétés mécaniques, rhéologiques ou barrières aux gaz. Ainsi, le rotomoulage de structures multicouches selon la présente invention est préféré, afin de protéger l'EVOH vis-à-vis de l'eau par exemple au moyen d'autres couches de matériaux thermoplastiques résistant à l'eau. Ceci n'a pas été réalisé dans l'art antérieur car les caractéristiques rhéologiques telles que la viscosité, la fluidité, etc. et physico-chimiques telles que la fusion, la polarité, et la température de dégradation des couches de matériaux thermoplastiques différentes de EVOH utilisées dans l'art antérieur pour le rotomoulage sont parfois très différentes les unes des autres.

La présente invention remédie à ce problème notamment par le choix d'un grade approprié de EVOH qui reste visqueux à l'état fondu, par sa micronisation, et par le choix de sa température de mise en oeuvre est légèrement supérieure à sa température de fusion. Ceci permet d'obtenir une couche d' EVOH épaisse et évite que les couches de matériaux thermoplastiques différentes de EVOH qui lui sont adjacentes se mélangent avec elle.

La présente invention présente en outre l'avantage de pouvoir rotomouler des multicouches sans être obligé de diminuer la température de l'appareil au fur et à mesure de la mise en oeuvre des couches successives des matériaux thermoplastiques. Ainsi, par exemple, contrairement à l'état de la technique, la température d'une couche interne de thermoplastique, c'est à dire de la dernière couche réalisée par le rotomoulage, peut être supérieure à celle de la couche externe de matériau thermoplastique, c'est à dire de la première couche réalisée, sans qu'il y ait interpénétration des couches.

La présente invention permet donc d'obtenir notamment par rotomoulage des structures de révolution sans soudure et homogènes, présentant des propriétés améliorées de perméabilité au gaz, de tenue mécanique, de tenue aux irradiations, et aux solvants. Elle fourni donc un procédé de fabrication d'une pièce de révolution et la pièce obtenue par ce procédé qui convient parfaitement pour des applications de stockage, de type réservoir à solvants, à hydrocarbures, à gaz par exemple hydrogène ou oxygène sous pression etc.

Selon l'invention, le dépôt de la couche constituée du copolymère éthylène-alcool vinylique peut être réalisé par exemple entre un dépôt d'une couche d'un matériau thermoplastique A et un dépôt d'une couche d'un matériau thermoplastique B, A et B étant utilisables en rotomoulage, ou dans la technique permettant un dépôt de couches successives, identiques ou différents et n'étant pas des copolymères éthylène-alcool vinylique.

Selon l'invention, les matériaux thermoplastiques déposés en couches, autres que le copolymère éthylène-alcool vinylique, c'est à dire les matériaux thermoplastiques A et B, peuvent être choisis identiques ou différents par exemple dans un groupe comprenant un polyéthylène (PE), un polyéthylène greffé (PE greffé), un polyéthylène téréphtalate (PET), un polypropylène (PP), un polyétheréthercétone (PEEK), un polycarbonate (PC), un copolymère éthylène acétate de vinyle (EVA), un polystyrène (PS), un polyfluorure de vinylidène (PVDF), un polyester amide ou un polyamide (PA) ou un polyarylamide (PAA) ou un mélange de ceux-ci.

Le procédé de la présente invention permet d'obtenir une pièce de révolution.

La pièce de révolution peut comprendre successivement une couche de polyamide, une couche de copolymère éthylène-alcool vinylique ayant une densité comprise entre 0,94 et 1,4 et un indice de fluidité compris entre 1,3 et 4,2 g/10 minutes à une température de 170 à 240°C, et une couche de polyéthylène greffé.

La pièce de révolution peut aussi comprendre successivement une première couche de polyamide, une couche de copolymère éthylène-alcool vinylique ayant une densité comprise entre 0,94 et 1,4 et un indice de fluidité compris entre 1,3 et 4,2 g/10 minutes à une température de 170 à 240°C, et une deuxième couche de polyamide, les couches de polyamide étant identiques ou différentes.

L'épaisseur de chaque couche de matériau peut être ajustée avec la quantité de poudre de polymère introduite compte tenu de la forme du moule, de la surface du moule à couvrir et de l'épaisseur de la couche désirée.

Selon l'invention, l'épaisseur de la couche en EVOH pourra être choisie par exemple afin d'augmenter les propriétés du matériau suivant les applications envisagées, en fonction du coût, du poids, de la tenue mécanique, des propriétés barrières aux gaz, etc. Cette couche constituée du copolymère éthylène-alcool vinylique peut être déposée par exemple, sans être limitatif, en une épaisseur comprise entre 0,3 et 20 mm, par exemple entre 0,5 et 10 mm, par exemple entre 0,5 et 5 mm.

Selon l'invention, les matériaux thermoplastiques déposés par exemple par rotomoulage, autres que le copolymère éthylène-alcool vinylique, peuvent être déposés en épaisseur adéquat pour l'utilisation prévue de la pièce fabriquée, par exemple sans être limitatif, en une épaisseur comprise entre 0,1 mm et 10 mm, par exemple entre 0,1 et 5 mm.

Les matériaux thermoplastiques, EVOH et autres, peuvent éventuellement être chargées par des charges organiques ou minérales afin d'améliorer la tenue mécanique, la tenue au vieillissement, ou pour faciliter la mise en oeuvre par exemple.

La pièce de révolution de la présente invention peut comprendre en outre une structure de renfort, telle qu'une structure de fils de carbone imprégnés de résine réticulée thermiquement. Le procédé peut alors comprendre en outre une étape de drapage ou tissage de cette structure de renfort sur la pièce de révolution.

Le procédé de la présente invention peut être réalisé selon le protocole suivant :
- La poudre d'un premier thermoplastique ou thermoplastique A, différent de EVOH, formant par exemple la première couche déposée par rotomoulage, est introduite dans le moule de l'appareillage qui est alors mis en rotation et introduit dans un four préchauffé à une température fixe d'au moins 200°C.
- Le moule en rotation est laissé dans le four, pendant un temps adapté et jusqu'à ce que la température de l'air interne atteigne une valeur adaptée, comprise entre la température de fusion, Tf, du premier polymère et 280°C, suivant la nature du thermoplastique.
- Le moule en rotation est alors retiré du four et est refroidi pendant un temps adapté et jusqu'à ce que la température de l'air interne au moule atteigne une valeur définie, par exemple comprise entre 280°C et 130°C, suivant la nature du premier thermoplastique.
- Le thermoplastique EVOH peut alors être introduit de façon continue ou non dans le moule en rotation qui est alors réintroduit dans le four chaud. Le grade de l'EVOH barrière aux gaz est choisi de manière à ce que sa viscosité à l'état fondu soit importante, c'est à dire telle que définie selon la présente invention. Dès que la température de l'air interne au moule atteint une valeur légèrement supérieure à la température de fusion de l'EVOH, c'est-à-dire par exemple de 185°C à 200°C, et de manière générale à une température pouvant aller jusqu'à 50°C au-dessus de la température de fusion de EVOH, le moule en rotation est retiré du four et est refroidi pendant un temps adapté et jusqu'à ce que la température de l'air interne au moule atteigne une valeur définie par exemple comprise entre 200°C et 150°C, suivant la nature du troisième polymère à introduire.
- La poudre d'un deuxième thermoplastique ou thermoplastique B, différent de EVOH, peut alors être introduit de façon continue ou non dans le moule en rotation qui est alors réintroduit dans le four chaud et la procédure commence comme décrit au premier point ci-dessus, suivant la structure multicouches envisagée. Contrairement aux multicouches obtenues par rotomoulage dans l'art antérieur, la température de mise en oeuvre de cette couche peut être supérieure à la température de mise en oeuvre des couches précédentes, du fait de la forte viscosité et de l'épaisseur de l'EVOH spécifiques de la présente invention.

Les paramètres temps et température de chauffage, de retrait et de refroidissement du moule, pour chacune des couches, sont définis en fonction de la nature du thermoplastique mis en oeuvre. Ces paramètres ainsi que les vitesses de rotation biaxiale du moule, la nature du moule par exemple en acier, inox, PTFE, etc. permettent entre autres d'ajuster la viscosité de la couche fondue des polymères et de faciliter le départ des bulles qui y sont éventuellement piégées.

Selon l'invention, de manière générale, le temps de mise en oeuvre des couches successives est de préférence de plus en plus court, si possible, de manière à ne pas dégrader les couches précédentes.

Selon la présente invention la couche d'EVOH peut être mise en oeuvre à une température légèrement supérieure à sa température de fusion, pouvant aller jusqu'à 230/240° C, et avec une épaisseur qui peut être supérieure à 0,5 mm ce qui est original par rapport à l'état de la technique. Ceci permet d'empiler sur la couche d'EVOH des couches thermoplastiques quelles que soient leurs températures de fusion et/ou de mise en oeuvre, alors que l'état de la technique préconisait de diminuer la température de mise en oeuvre des couches suivantes pour éviter l'interpénétration des couches.

Selon l'invention, l'utilisation d'une faible pression de l'ordre de quelques hectopascals et/ou d'un gaz inerte, par exemple d'azote, peuvent faciliter la mise en oeuvre des structures multicouches suivant la nature et l'empilement des couches thermoplastiques.

Les applications de la présente invention sont donc nombreuses, et outre celles précitées, ont peut par exemple citer aussi les piles à combustibles soumises à des pressions de 200 à 600 x 10⁵ Pa, les applications réservoir H2 pour pile à combustible (PAC) dans lesquelles le réservoir peut être soumis à des températures de -40 à +60 °C.

Le procédé de la présente invention et la pièce de révolution obtenue permettent, outre les avantages précités, de fabriquer des réservoir plus légers que ceux de l'art antérieur, de diminuer les coût de fabrication, et d'augmenter la durée de vie des réservoirs fabriqués.

D'autres caractéristiques et avantages apparaîtrons encore à la lecture des exemples qui suivent en référence aux figures annexées.

### Figures

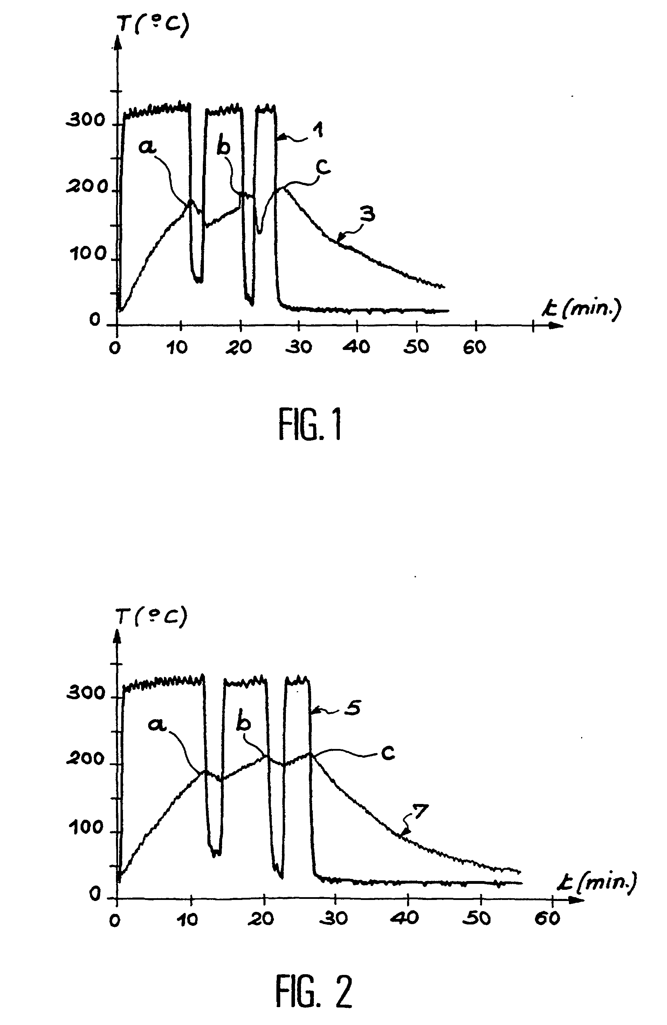

- La figure 1 est une représentation graphique de l'évolution de la température d'un capteur de température placé à l'extérieur du moule de rotomoulage et de la température de l'atmosphère à l'intérieur du four de rotomoulage en fonction du temps en minutes au cours de la fabrication d'une pièce de révolution tricouche polyamide PA12 1mm/éthylène-alcool vinylique 2mm/polyéthylène greffé 1mm, selon le procédé de la présente invention,
- La figure 2 est une représentation graphique de l'évolution de la température d'un capteur de température placé à l'extérieur du moule de rotomoulage et de la température de l'atmosphère à l'intérieur du four de rotomoulage en fonction du temps en minutes au cours de la fabrication d'une pièce de révolution tricouche polyéthylène greffé 1mm/éthylène-alcool vinylique 3mm/polyamide PA12 1mm, selon le procédé de la présente invention, et

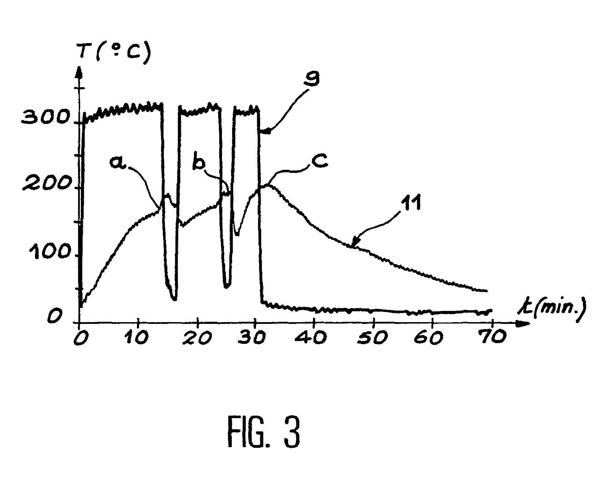

- La figure 3 est une représentation graphique de l'évolution de la température d'un capteur de température placé à l'extérieur du moule de rotomoulage et de la température de l'atmosphère à l'intérieur du four de rotomoulage en fonction du temps en minutes au cours de la fabrication d'une pièce de révolution tricouche polyamide PA12 1mm/éthylène-alcool vinylique 2mm/ polyamide PA6 3mm, selon le procédé de la présente invention

### Exemples

### Exemple 1

Une pièce de révolution d'un tricouche constitué d'une couche extérieure de 1 mm d'épaisseur en polyamide 12 (PA12) RISLAN (marque commerciale), de grade commercial ARVO 950 TLD fabriqué par la société TOTAL-FINA-ELF, d'une couche intermédiaire (interne) de 2 mm d'épaisseur en copolymère éthylène-alcool vinylique (EVOH) ) SOARNOL (marque commerciale), de grade commercial D 2908 fabriqué par la société NIPPON GOHSEI et d'une couche intérieure de 1 mm d'épaisseur en polyéthylène greffé (PE greffé) OREVAC (marque commerciale), de grade commercial 18350 P fabriqué par la société TOTAL-FINA-ELF a été obtenu par rotomoulage selon la présent invention.

Les températures de fusion théoriques de ces trois thermoplastiques sont respectivement les suivantes : T_{PA12}=170°C, T_{EVOH}=180°C, T_{PEgreffé}=130°C.

Les principaux paramètres en termes de temps et de température de cycle utilisés sont explicités sur la figure 1 annexée. Il s'agit d'une représentation graphique de l'évolution de la température d'un capteur de température placé à l'extérieur du moule de rotomoulage, courbe 1, et de la température de l'atmosphère à l'intérieur du four de rotomoulage, courbe 3, en °C en fonction du temps en minutes au cours de la fabrication de la pièce de révolution selon la présente invention. Sur cette figure, les élévations de température a), b) et c) correspondent respectivement aux première, deuxième (EVOH) et troisième couches de polymères thermoplastiques.

Les températures successives de mise en oeuvre des couches sont 180°C, 190°C et 200°C. Bien que la première couche en PA12 soit refondue à 200°C, il n'y a pas d'interpénétration avec la couche en EVOH car celle-ci bien qu'également fondue, reste très visqueuse à 200°C en forte épaisseur. Bien que la température de fusion du PE greffé soit autour de 130°C, il est nécessaire de le mettre en oeuvre à haute température, c'est à dire à une température supérieure à 180°C, ici de 200°C, pour éliminer les bulles formées.

L'adhésion chimique entre les trois couches est possible par le choix de trois polymères polaires ce qui induit une bonne tenue mécanique de l'ensemble.

Les granulés de EVOH ont été préalablement micronisés au moyen d'un appareil de type WEDCO (marque de commerce) en poudre de 400 microns qui a ensuite été séchée.

La vitesse de rotation biaxiale de la rotomouleuse est de 5,4 tours/minute pour l'arbre primaire et de 7,3 tours/minute pour l'arbre secondaire. Le moule utilisé est en aluminium dont la surface interne est recouverte de Téflon (marque déposée). La rotomouleuse utilisée est de type CACCIA (marque de commerce) munie d'un four à gaz et du logiciel ROTOLOG (marque déposée).

### Exemple 2

Une structure constituée d'un tricouche comprenant dans cet exemple une couche extérieure de 1 mm d'épaisseur en polyéthylène greffé (PE greffé) OREVAC (marque commerciale), de grade commercial 18350 P fabriqué par la société TOTAL-FINA-ELF, d'une couche intermédiaire ou interne de 3 mm d'épaisseur en copolymère éthylène-alcool vinylique (EVOH) SOARNOL (marque commerciale), de grade commercial D 2908 fabriqué par la société NIPPON GOHSEI et d'une couche intérieure de 1 mm d'épaisseur en polyamide 12 (PA 12) RISLAN (marque commerciale), de grade commercial ARVO 950 TLD fabriqué par la société TOTAL-FINA-ELF a été obtenu par rotomoulage selon la présente invention.

Les principaux paramètres en termes de temps et de température de cycle utilisés sont explicités sur la figure 2 annexée. Il s'agit d'une représentation graphique de l'évolution de la température d'un capteur de température placé à l'extérieur du moule de rotomoulage et de la température de l'atmosphère à l'intérieur du four de rotomoulage en °C en fonction du temps en minutes au cours de la fabrication de la pièce de révolution tricouche. Sur cette figure, les élévations de température a), b) et c) correspondent respectivement aux première, deuxième (EVOH) et troisième couches de polymères thermoplastiques.

Les températures successives de mise en oeuvre des couches sont respectivement 190°C, 200°C et 205°C.

Bien que la première couche en PE greffé soit fondue à 205°C, il n'y a pas d'interpénétration avec la couche en EVOH car celle-ci, bien qu'également fondue, reste encore très visqueuse à 205°C en forte épaisseur. Les granulés de EVOH ont été préalablement micronisés au moyen d'un appareil de type WEDCO (marque de commerce) en poudre de 300 microns qui a ensuite été séchée. La vitesse de rotation biaxiale de la rotomouleuse est de 6,2 tours/minute pour l'arbre primaire et de 8,5 tours/minute pour l'arbre secondaire. Le moule utilisé est en aluminium dont la surface interne est recouverte de Téflon (marque déposée). La rotomouleuse utilisée est de type CACCIA (marque de commerce) munie d'un four à gaz et du logiciel ROTOLOG (marque déposée).

### Exemple 3

Une structure constituée d'un tricouche comprenant cette fois-ci, d'une couche extérieure de 1 mm d'épaisseur en polyamide 12 (PA 12) RISLAN (marque commerciale), de grade commercial ARVO 950 TLD fabriqué par la société TOTAL-FINA-ELF, d'une couche intermédiaire (interne) de 2 mm d'épaisseur en copolymère éthylène-alcool vinylique (EVOH) SOARNOL (marque commerciale), de grade commercial D 2908 fabriqué par la société NIPPON GOHSEI et d'une couche intérieure de 3 mm d'épaisseur en polyamide 6 (PA 6) ORGALLOY (marque commerciale), de grade commercial LE 6000 fabriqué par la société TOTAL-FINA-ELF a été obtenue par rotomoulage selon la présente invention.

Les principaux paramètres en termes de temps et de température de cycle utilisés sont explicités sur la figure 3 annexée. Il s'agit d'une représentation graphique de l'évolution de la température d'un capteur de température placé à l'extérieur du moule de rotomoulage et de la température de l'atmosphère à l'intérieur du four de rotomoulage en °C en fonction du temps en minutes au cours de la fabrication de la pièce de révolution tricouche. Sur cette figure, les élévations de température a), b) et c) correspondent respectivement aux première, deuxième (EVOH) et troisième couches de polymères thermoplastiques.

Les températures successives de mise en oeuvre des couches sont respectivement 190°C, 190°C et 210°C.

Le tricouche obtenu présente les mêmes qualités que celles obtenues pour les exemples 1 et 2 précédents.

## Revendications

1. Procédé de fabrication d'une pièce de révolution comprenant un cycle de dépôts successifs de couches de matériaux thermoplastiques par rotomoulage, ledit cycle comprenant au moins un dépôt par rotomoulage, à une température de 170 à 240°C d'une couche constituée d'un copolymère éthylène-alcool vinylique ayant une densité à cette température comprise entre 0,94 et 1,4 (c'est-à-dire une masse volumique comprise entre 0,94 et 1,4 g/cm³) et un indice de fluidité compris entre 1,3 et 4,2 g / 10 minutes.

2. Procédé selon la revendication 1, dans lequel le dépôt de la couche constituée du copolymère éthylène-alcool vinylique est réalisé entre un dépôt d'une couche d'un matériau thermoplastique A et un dépôt d'une couche d'un matériau thermoplastique B, A et B étant utilisables en rotomoulage, identiques ou différents et n'étant pas des copolymères éthylène-alcool vinylique.

3. Procédé selon la revendication 1 ou 2, dans lequel les matériaux thermoplastiques déposés en couches, autres que le copolymère éthylène-alcool vinylique, sont choisis dans un groupe comprenant un polyéthylène, un polyéthylène greffé, un polyéthylène téréphtalate, un polypropylène, un polyétheréthercétone, un polycarbonate, un copolymère éthylène acétate de vinyle, un polystyrène, un polyfluorure de vinylidène, un polyester amide ou un polyamide ou un polyarylamide, ou un mélange de ceux-ci.

4. Procédé selon la revendication 1 ou 2, dans lequel la couche constituée du copolymère éthylène-alcool vinylique est déposée en une épaisseur comprise entre 0,3 et 20 mm.

5. Procédé selon la revendication 1 ou 2, dans lequel les matériaux thermoplastiques déposés par rotomoulage, autres que le copolymère éthylène-alcool vinylique, sont déposés en une épaisseur comprise entre 0,1 mm et 10 mm.

6. Procédé selon la revendication 1 ou 2, dans lequel le dépôt d'une couche de copolymère éthylène-alcool vinylique est effectué par rotomoulage, à partir d'une poudre de ce polymère ayant une granulométrie inférieure à 0,7 mm.

7. Pièce de révolution susceptible d'être obtenue par un procédé selon l'une quelconque des revendications 1 à 6, ladite pièce de révolution comprenant au moins une couche constituée d'un copolymère d'éthylène-alcool vinylique ayant une densité comprise entre 0,94 et 1,4 (c'est-à-dire une masse volumique comprise entre 0,94 et 1,4 g/cm³) et un indice de fluidité compris entre 1,3 et 4,2 g/10 minutes à une température de 170 à 240°C.

8. Pièce de révolution selon la revendication 7, comprenant successivement une couche de polyamide, une couche de copolymère éthylène-alcool vinylique, et une couche de polyéthylène greffé.

9. Pièce de révolution selon la revendication 7, comprenant successivement une première couche de polyamide, une couche de copolymère éthylène-alcool vinylique, et une deuxième couche de polyamide, les couches de polyamide étant identiques ou différentes.

## Patentansprüche

1. Verfahren zur Herstellung eines Rotationskörpers, einen Zyklus sukzessiver Abscheidungen von Schichten aus thermoplastischem Material umfassend, wobei dieser Zyklus wenigstens die Abscheidung einer Schicht durch Rotationsformen bei einer Temperatur von 170 bis 240 °C umfasst, die durch ein Ethylen-Vinylalkohol-Copolymer gebildet wird, das bei dieser Temperatur eine Dichte zwischen 0,94 und 1,4 (das heißt eine volumenbezogene Masse zwischen 0,94 und 1,4 g/cm³) und einen Fließzahl zwischen 1,3 und 4,2 g/10 Minuten hat.

2. Verfahren nach Anspruch 1, bei dem die Abscheidung der Ethylen-Vinylalkohol-Copolymerschicht zwischen einer Abscheidung einer Schicht aus einem thermoplastischen Material A und einer Abscheidung einer Schicht aus einem thermoplastischen Material B realisiert wird, wobei A und B für das Rotationsformen geeignet sind, gleich oder unterschiedlich sind und keine Ethylen-Vinylalkohol-Copolymere sind.

3. Verfahren nach Anspruch 1 oder 2, bei dem die außer dem Ethylen-Vinylalkohol-Copolymer als Schichten abgeschiedenen Materialien aus einer Gruppe ausgewählt werden, die ein Polyethylen, ein Pfropf-Polyethylen, ein Polyethylenterephthalat, en Polypropylen, ein Polyetheretherketon, ein Polycarbonat, ein Ethylen-Vinylacetat-Copolymer, ein Polystryrol, ein Vinyliden-Polyfluorid, ein Polyesteramid oder ein Polyamid oder ein Polyarylamid oder eine Mischung aus diesen umfasst.

4. Verfahren nach Anspruch 1 oder 2, bei dem die durch ein Ethylen-Vinylalkohol-Copolymer gebildete Schicht mit einer zwischen 0,3 und 20 mm enthaltenen Dicke abgeschieden wird.

5. Verfahren nach Anspruch 1 oder 2, bei dem die außer dem Ethylen-Vinylalkohol-Copolymer durch Rotationsformen abgeschiedenen thermoplastischen Materialien mit einer zwischen 0,1 und 10 mm enthaltenen Dicke abgeschieden werden.

6. Verfahren nach Anspruch 1 oder 2, bei dem die Abscheidung einer Ethylen-Vinylalkohol-Copolymerschicht durch Rotationsformen aus einem Pulver dieses Copolymers realisiert wird, dessen Granutometrie bzw. Korngröße unter 0,7 mm liegt.

7. Rotationskörper, realisiert durch ein Verfahren nach einem der Ansprüche 1 bis 6, wobei dieser Rotationskörper wenigstens eine Schicht umfasst, die durch ein Ethylen-Vinylalkohol-Copolymer gebildet wird, das bei einer Temperatur von 170 bis 240 °C eine Dichte zwischen 0,94 und 1,4 (das heißt eine volumenbezogene Masse zwischen 0,94 und 1,4 g/cm³) und einen Fließzahl zwischen 1,3 und 4,2 g/10 Minuten hat.

8. Rotationskörper nach Anspruch 7, der sukzessive eine Polyamidschicht, eine Ethylen-Vinylalkohol-Copolymerschicht und eine Schicht aus gepfropftem Polyethylen umfasst.

9. Rotationskörper nach Anspruch 7, der sukzessive eine erste Polyamidschicht, eine Ethylen-Vinylalkohol-Copolymerschicht und eine zweite Polyamidschicht umfasst, wobei die Polyamidschichten gleich oder unterschiedlich sind.

## Claims

1. Manufacturing process for a cylindrical element comprising a cycle of successive deposits of layers of thermoplastic materials by rotation moulding, the said cycle comprising at least one deposit by rotation moulding at a temperature from 170 to 240°C, composed of an ethylene-vinyl alcohol copolymer with a density at this temperature of between 0.94 and 1.4, (i.e. a density between 0.94 and 1.4 g/cm³), and a melt flow index of between 1.3 and 4.2 g/10 minutes.

2. Process according to claim 1, in which the layer composed of an ethylene-vinyl alcohol copolymer is deposited between a deposit of a layer of thermoplastic material A and a deposit of a layer of thermoplastic material B, A and B being usable in rotation moulding, that may be identical or different, and are not ethylene-vinyl alcohol copolymers.

3. Process according to claim 1 or 2, in which the thermoplastic materials deposited in layers other than the ethylene-vinyl alcohol copolymer are chosen from a group comprising a polyethylene, a grafted polyethylene, a polyethylene terephthalate, a polypropylene, a polyetheretherketone, a polycarbonate, an ethylene vinyl acetate copolymer, a polystyrene, a polyvinylidene fluoride, an amide polyester, or a polyamide, or a polyarylamide, or a mix of these thermoplastic materials.

4. Process according to claim 1 or 2, in which the layer composed of the ethylene-vinyl alcohol copolymer is deposited with a thickness of between 0.3 and 20 mm.

5. Process according to claim 1 or 2, in which the thermoplastic materials deposited by rotation moulding other than ethylene-vinyl alcohol copolymer are deposited with a thickness of between 0.1 mm and 10 mm.

6. Process according to claim 1 or 2, in which the layer of ethylene-vinyl alcohol copolymer is deposited by rotation moulding, starting from a powder of this polymer with a size grading of less than 0.7 mm.

7. Cylindrical element obtainable by a process according to any one of the claims 1 to 6, said cylindrical element comprising at least one layer constituted by an ethylene-vinyl alcohol copolymer having a density between 0.94 and 1.4 (i.e. a density between 0.9 and 1.4 g/cm³) and a melt flow index between 1.3 and 4.2 g/10 minutes at a temperature of 170 to 240°C.

8. Cylindrical element according to claim 7, comprising successively a polyamide layer, an ethylene-vinyl alcohol copolymer layer and a grafted polyethylene layer.

9. Cylindrical element according to claim 7, successively comprising a first polyamide layer, an ethylene-vinyl alcohol copolymer layer and a second polyamide layer, the polyamide layers being the same or different.
